# EUROPÄISCHE PATENTSCHRIFT

(11) **EP 2 393 847 B1**
(45) Veröffentlichungstag und Bekanntmachung des Hinweises auf die Patenterteilung: **25.06.2014**
(21) Anmeldenummer: 10711826.7
(22) Anmeldetag: 06.02.2010
(51) Int. Cl.: C08F 18/08, C08F 218/08, C08L 23/08, D06B 3/00

(54) **VINYLACETAT-ETHYLEN-COPOLYMERDISPERSIONEN UND DAMIT BEHANDELTE TEXTILE FLÄCHENGEBILDE**
VINYL ACETATE-ETHYLENE-COPOLYMER DISPERSIONS AND TEXTILE WEB MATERIAL TREATED THEREWITH
DISPERSIONS DE COPOLYMÈRES ACÉTATE DE VINYLE-ÉTHYLÈNE, ET PRODUITS TEXTILES PLATS TRAITÉES PAR CES DERNIÈRES

(30) Priorität: 09.02.2009 DE 102009008143
(43) Veröffentlichungstag der Anmeldung: 14.12.2011
(73) Patentinhaber: Celanese Emulsions GmbH, 65843 Sulzbach (Taunus) (DE)
(72) Erfinder: MÜLLER, Harmin, 65719 Hofheim (DE); WORMALD, Paul, Stuart, Ashton under Lyne OL6 9RD Lancashire (GB)
(74) Vertreter: Von Kreisler Selting Werner - Partnerschaft von Patentanwälten und Rechtsanwälten mbB
(86) Internationale Anmeldenummer: PCT/EP2010/000745
(87) Internationale Veröffentlichungsnummer: WO 2010/089142

(56) Entgegenhaltungen:
- EP-A1- 1 889 890
- EP-A1- 2 088 162
- EP-A2- 1 454 930
- US-A1- 2005 100 706
- Lanxess: "Levapren EVM" Lanxess September 2005 (2005-09), XP002583462 Gefunden im Internet: URL:http://techcenter.lanxess.com/trp/amer icas/en/docguard/LEVAPREN_EVM_-_The_Cost_E ffective_Specialty_Rubber.pdf?docId=61400> [gefunden am 2010-05-20]

## Beschreibung

Die vorliegende Erfindung betrifft Vinylacetat-Ethylen Dispersionen ("VAE-Dispersionen), die sich insbesondere für die Behandlung von textilen Flächengebilden eignen sowie die damit behandelten textilen Flächengebilde, welche sich insbesondere als Fussbodenbeläge oder als Gurte eignen.

Moderne Fußbodenbeläge können aus unterschiedlichsten Materialkombinationen bestehen. So kann es sich um textile Flächen, beispielsweise Nonwovens, handeln, die mit einem Binder stabilisiert sind; oder es handelt sich um Florstoffe, bei denen Fäden in eine Grundfläche eingearbeitet sind und durch Applikation eines Bindemittels in der Grundfläche fixiert werden. Darüber hinaus können Fußbodenbeläge mehrere Schichten aufweisen, welche durch Bindemittel bzw. Klebstoffe miteinander laminiert wurden. Neben der eigentlichen Trittfläche ist bei diesen Laminaten auf der von der Trittfläche abgewandten Seite eine Rückenschicht angebracht. Diese dient einerseits dem Fixieren der Materialien, welche die Trittfläche ausbilden und bestimmt andererseits den Trittkomfort massgeblich.

Für das Stabilisieren der textilen Flächen bzw. für das Laminieren verschiedenster Schichten wurden in der Vergangenheit bereits Binder aus unterschiedlichsten Kunststoffen eingesetzt (vergl. WO 90/00967 A1). Häufig wird Styrol-Butadien Latex eingesetzt. Es hat auch bereit Vorschläge gegeben, für diesen Zwecke VAE-Copolymerdispersionen einzusetzten. Beispiele dafür finden sich in GB 1,442,806 A, EP 0 432 391, EP 0 864 685 A1, US 5,084,503 A und US 5,124,394 A.

EP 1 008 689 A2 beschreibt vernetzbare Teppichrückenbeschichtungen enthaltend eine VAE-Copolymerisatdispersion abgeleitet von 4 bis 25 Gew. % Ethylen, 67 bis 95 Gew. % Vinylacetat und 0,1 bis 8 Gew. % eines ethylenisch ungesättigten hydroxyfunktionellen Monomers sowie ein ausgewähltes Vernetzungsmittel. Nach der Beschreibung werden Dispersionen eingesetzt, die durch Schutzkolloid- / Emulgatorkombinationen stabilisiert sind. Einzelheiten zur den Eigenschaften der eingesetzten Dispersionen, wie Ethylengehalt, Glasübergangstemperatur oder Teilchengrößen des VAE-Copolymeren sind nicht offenbart.

WO 2006/0071157 A1 beschreibt VAE-Copolymerdispersionen, die sich zur Beschichtung von Teppichen eignen. Das eingesetzte VAE-Copolymer ist relativ weich eingestellt und weist eine Glasübergangstemperatur im Bereich von 0 bis -40°C auf. Der Ethylengehalt dieser Copolymeren ist entsprechend hoch.

Die bisher für dieses Einsatzgebiet vorgeschlagenen VAE-Copolymeren zeichnen sich im allgemeinen durch einen vergleichsweise hohen Gehalt an einpolymerisierten Ethyleneinheiten aus; typischerweise liegt der Gehalt an Ethyleneinheiten deutlich über 10 Gew. %, bezogen auf die Gesamtmenge der eingesetzten Monomeren. Derartige VAE-Copolymerdispersionen führen zu einer guten Verklebefestigkeit. Die Dimensionsstabilität der beschichteten Produkte ist allerdings noch verbesserungsbedürftig.

VAE-Copolymerdispersionen sind auch für andere Einsatzzwecke bekannt. So beschreibt DE 60 2004 000 117 T2 das Einbringen eines selbstvernetzenden Polymers in ein Vliestoffbindemittel zur Verbesserung der Nassfestigkeit eines befeuchteten Wischtuches. Als Bindemittel werden unter anderem Vinylester-Ethylen-Copolymerisate beschrieben, die sich von 65-85 Gew. % eines Vinylesters, 5-30 Gew. % an Ethylen sowie gegebenenfalls bis zu 12 Gew. % eines vernetzenden Monomeren ableiten. Die Dispersionen sind aufgrund ihres Ethylengehalts von mehr als 5 Gew. % relativ weich eingestellt. Diese Dispersionen dürften die Dimensionsstabilität, wie sie bei Teppichen oder Gurten üblich ist, nicht erreichen. Die Dimensionsstabilität der damit imprägnierten Wischtücher wird nicht verbessert, was bei diesem Anwendungsgebiet auch nicht erforderlich ist.

DE 10 2006 037 318 A1 offenbart ein Verfahren zur Applikation eines Dispersionsklebstoffes mittels Düsenauftrag. Dabei kommen vorzugsweise Vinylester-Ethylen-Copolymere zum Einsatz, die sich von 40-95 Gew. % von Vinylestern, bis zu 45 Gew. % Ethylen und bis zu 60 Gew. % an weiteren damit copolymerisierbaren Monomeren ableiten. Die konkret in dieser Schrift offenbarten VAE-Copolymerdispersionen weisen Ethylengehalte von deutlich über 5 Gew. % auf.

DE 10 2004 023 374 A1 beschreibt konservierungsfreie Beschichtungsmittel enthaltend ein ausgewähltes Vinylester-Copolymer und ein stark basisches Agens zum Einstellen eines pH Werts der Dispersion auf einen Wert oberhalb von 10. Beschrieben werden Copolymere abgeleitet von Vinylacetat, Ethylen und Versatic-Säuren. Der Ethylengehalt dieser Copolymeren beträgt typischerweise 15 bis 20 Gew. %.

DE 691 15 448 T2 beschreibt Vinylacetat-Ethylen-Copolymeremulsionen mit verbesserter Naßhaftung. Diese leiten sich von 70-98 Gew. % Vinylacetat und 2-30 Gew. % Ethylen sowie gegebenenfalls bis zu 10 Gew. % weiteren damit copolymerisierbaren Monomeren ab. Als Stabilisierungssystem wird eine ternäre Mischung von Polyvinylalkoholen verwendet. Die mittleren Teilchendurchmesser der erhaltenen Dispersionen sind vergleichsweise grob und liegen typischerweise zwischen 0,8 und 1,2 µm (d_{w}).

DE 600 15 285 T2 beschreibt ein Verfahren zur Herstellung von Vinylacetat-Ethylen-Copolymeremulsionen stabilisiert mit einer Polyethylenglykol-Polyvinylalkoholmischung. Die Copolymeren leiten sich von 50-95 Gew. % Vinylacetat und 5-30 Gew. % Ethylen sowie gegebenenfalls bis zu 10 Gew. % weiteren damit copolymerisierbaren Monomeren ab. Als Stabilisierungssystem wird eine Polyethylenglykol-Polyvinylalkoholmischung verwendet. Auch hier dürften die mittleren Teilchendurchmesser der erhaltenen Dispersionen vergleichsweise grob sein typischerweise im Bereich von deutlich oberhalb von 500 nm (d_{w}) liegen.

DE 29 49 154 A1 beschreibt ein Verfahren zur Herstellung von Vinylacetat-Ethylen-Copolymerdispersionen abgeleitet von 60-95 Gew. % Vinylacetat, 5-40 Gew. % Ethylen und gegebenenfalls geringe Mengen weiterer damit copolymerisierbarer Monomerer. Die Polymerisation erfolgt in Gegenwart eines Stabilisierungssystems aus Emulgator und Schutzkolloid. Vinylacetat und Emulgator werden während der Polymerisation portionsweise zugesetzt.

DE 26 01 200 A1 beschreibt eine wässrige Dispersion eines eine Epoxidkomponente enthaltenden Vinylacetat-Ethylen-Copolymerisats. Der Epoxidanteil beträgt 0,5 bis 60 Gew. %, bezogen auf die Gesamtmenge der bei der Copolymerisation eingesetzten Monomeren. Der Anteil an Vinylacetat bzw. an Ethylen beträgt 60-95 Gew. % bzw. 5-40 Gew. %, bezogen auf die Gesamtmonomermenge. Die Emulsionspolymerisation kann in Gegenwart von Emulgatoren und/oder von Schutzkolloiden durchgeführt werden.

US-5,180,771 A offenbart eine Dispersion enthaltend ein Vinylacetat-Ethylen-Copolymer mit 60-94 Gew. % Vinylacetateinheiten, 5-30 Gew. % Ethyleneinheiten und 1-10 Gew. % Vernetzereinheiten sowie enthaltend 1-45 Gew. % and Tetramethylolglycoluril.

Bei der Auswahl von Behandlungsmitteln für Fußbodenbeläge ist einerseits auf eine ausreichend hohe Biegesteifheit (Dimensionsstabilität) des aus dem Binder gebildeten Films bzw. imprägnierten Flächengebildes zu achten; andererseits darf der Film bzw. das imprägnierte Flächengebilde nicht zu spröde sein, um ein Brechen des textilen Flächengebildes beim Gebrauch zu verhindern.

In der Vergangenheit hat man beim Einsatz von Vinylacetat-Homopolymerdispersionen ("Vac-Homopolymerdispersionen") für diesen Zweck in der Regel Weichmacher zugesetzt, um das geforderte Eigenschaftsprofil einzustellen. Bisher eingesetzte VAE-Copolymerdispersionen verkleben die Fasern zwar gut, sind aber zu weich, um eine befriedigende Dimensionsstabilität zu erreichen. Außerdem neigen Weichmacher zur Migration und sind daher nach Möglichkeit zu vermeiden.

Es wurden jetzt ausgewählte VAE-Copolymerdispersionen gefunden, die sich durch eine gute Biegesteifigkeit kombiniert mit einer geringen Sprödigkeit auszeichnen, die ohne Weichmacher oder mit nur geringen Anteilen an Weichmachern auskommen und die sich hervorragend für den Einsatz als Bindemittel für textile Flächengebilde, insbesondere solchen, die als Fußbodenbeläge oder als Gurte eingesetzt werden, eignen. Diese VAE-Copolymerdispersionen zeichnen sich darüber hinaus durch eine gute Dimensionsstabilität und Haptik aus.

Aufgabe der vorliegenden Erfindung ist daher die Bereitstellung von VAE-Copolymerdispersionen mit dem oben genannten Eigenschaftsprofil.

Die vorliegende Erfindung betrifft eine Vinylacetat-Ethylen-Copolymerdispersion, die sich von 60 bis 99 Gew.-% Vinylacetat, 1 bis 4 Gew. %, vorzugsweise 1 bis 3 Gew. %, und ganz besonders bevorzugt 2-3 Gew. % Ethylen und gegebenenfalls bis zu 30 Gew. % weiteren damit copolymerisierbaren Monomeren ableitet, wobei das Copolymere eine Glasübergangstemperatur von +15 bis +32 °C aufweist, einen mittleren Teilchendurchmesser d_{w} von 50 bis 500 nm besitzt und mit mindestens 1 Gew. % an Emulgatoren und 0-2 Gew. % an Schutzkolloiden stabilisiert ist, wobei im Falle von Stabilisatorsystemen aus Emulgatoren und Schutzkolloiden die Menge an Emulgator mindestens doppelt so groß, vorzugsweise mindestens dreimal so groß ist, wie die Menge an Schutzkolloid.

Unter Vinylacetat-Ethylen-Copolymer ist im Rahmen dieser Beschreibung ein Vinylacetatcopolymer zu verstehen, das sich mindestens von Vinylacetat und von Ethylen ableitet.

Die erfindungsgemäße VAE-Copolymerdispersion ist hauptsächlich durch Emulgatoren stabilisiert. Dies bedeutet, dass als Stabilisatoren entweder nur Emulgatoren eingesetzt werden oder Kombinationen von Emulgatoren und Schutzkolloiden, wobei in diesen Kombinationen die Emulgatormenge deutlich über der Menge an Schutzkolloid zu wählen ist.

Die Viskosität der erfindungsgemäßen Vinylester-Ethylen-Copolymerdispersionen beträgt üblicherweise 100 bis 10.000 mPas, insbesondere 200 bis 6.000 mPas und ganz besonders bevorzugt 400 bis 4.000 mPas. Für die Zwecke dieser Beschreibung erfolgt die Viskositätsmessung mit dem Brookfield-Viskosimeter bei 25°C unter Verwendung der Spindel 5, bei 20 Umdrehungen pro Minute (Upm). Diese Viskositätsangaben beziehen sich auf Dispersionen mit einem Feststoffgehalt im Bereich von 40 bis 70 Gew.-%, bezogen auf die Gesamtmasse der Dispersion. Bei einer Verdünnung erniedrigt sich die Viskosität entsprechend.

Die VAE-Copolymeren der erfindungsgemäßen Dispersion weisen Glasübergangstemperaturen zwischen +15 und +32°C, vorzugsweise von +20 bis +30 °C auf. Bei heterogenen Systemen, wie zum Beispiel Kern-Schale oder Hemisphären, ist die tiefeste Glasübergangstemperatur zwischen +15 bis +32°C, vorzugsweise von +20 bis +30°C. Für die Zwecke der vorliegenden Beschreibung wird die Glasübergangstemperatur durch DSC-Messung bestimmt mit einer Aufheizgeschwindigkeit von 10 K/Minute.

Die Copolymeren der erfindungsgemäßen Dispersion sind des weiteren durch sehr geringe mittlere Teilchendurchmesser gekennzeichnet. Diese werden in der Form von d_{w}-Werten angegeben und liegen zwischen 50 und 500 nm, vorzugsweise zwischen 100 und 300 nm. Die Bestimmung der Teilchengrößenverteilung erfolgt für die Zwecke der vorliegenden Erfindung mit Hilfe der Laseraerosolspektroskopie. Die Verteilungsbreite spielt bei der erfindungsgemäßen Anwendung eine untergeordnete Rolle. Typische Verteilungsbreiten d_{w}/dₙ liegen im Bereich von 1,02 bis 6.

Überraschend wurde gefunden, dass die erfindungsgemäßen Vinylacetat-Ethylen-Copolymerdispersionen sich besonders gut als Binder sowie als Klebstoffe für textile Flächengebilde eignen und eine sehr gute Balance zwischen Dimensionsstabilität und Flexibilität ergeben. Es wurde gefunden, dass sich Vinylacetat-Ethylen-Copolymere mit einem vergleichsweise geringen Anteil an Ethyleneinheiten und einem hohen Anteil an sehr feinen Polymerteilchen ausgezeichnet für diese Anwendung einsetzen lassen. Durch den gezielten Einbau eines bestimmten Anteils an "weichem" Monomer Ethylen, gegebenenfalls in Kombination mit weiteren Comonomeren, wie Acrylaten, lassen sich die Verarbeitungs- und Gebrauchseigenschaften der erfindungsgemäßen VAE-Copolymerisate steuern.

Die erfindungsgemäßen VAE-Copolymerdispersionen werden durch radikalische Emulsionspolymerisation von wenigstens Vinylacetat und wenigstens Ethylen hergestellt und werden hauptsächlich durch Emulgatoren stabilisiert. Die Monomerkombination wird so gewählt, dass die Copolymeren der erfindungsgemäßen VAE-Copolymerdispersionen Glasübergangstemperaturen im oben angegebenen Bereich aufweisen. Heterogene Systeme, wie zum Beispiel Kern-Schale oder Hemisphären, können mehrere Glasübergangstemperaturen aufweisen; in diesem Falle bewegt sich mindestens eine Glasübergangstemperatur in den oben genannten Grenzen, während sich die Glasübergangstemperatur der anderen Phase sich auch oberhalb dieser Grenzen bewegen kann.

Neben dem Vinylacetat und dem Ethylen kann das erfindungsgemäße VAE-Copolymer sich von weiteren damit copolymerisierbaren wenigstens eine monoethylenisch ungesättigte Gruppe aufweisenden Monomeren ableiten. Als wenigstens eine monoethylenisch ungesättigte Gruppe aufweisende Monomere kommen die an sich bekannten radikalisch polymerisierbaren Monomeren in Betracht. Diese sind allerdings so auszuwählen, dass Vinylester-Ethylen-Copolymere mit den oben angegebenen Glasübergangstemperaturen entstehen.

Dabei können Polymere mit homogenen und heterogenen Morphologien erzeugt werden.

Die weiteren mit Vinylacetat und Ethylen copolymerisierbaren wenigstens eine monoethylenisch ungesättigte Gruppe aufweisenden Monomeren können unterteilt werden in solche, welche mindestens eine funktionelle Gruppe aufweisen, die dem VAE-Copolymer eine bestimmte reaktive Eigenschaft verleiht ("funktionelle Monomeren") und in solche, welche keine derartige funktionelle Gruppe aufweisen ("nicht-funktionelle Monomeren"). Diese nicht-funktionellen Monomeren können beispielsweise zum Einstellen der Glasübergangstemperatur oder der hydrophoben bzw. hydrophilen Eigenschaften des VAE-Copolymeren eingesetzt werden.

Der Anteil der funktionellen Monomeren im VAE-Copolymer kann zwischen 0 und 10 Gew. %, vorzugsweise zwischen 0 und 5 Gew. % betragen.

Der Anteil der nicht-funktionellen Monomeren im VAE-Copolymer kann zwischen 0 und 20 Gew. %, vorzugsweise zwischen 0 und 10 Gew. % betragen, wobei die Gesamtmenge von funktionellen und nicht-funktionellen Monomeren nicht mehr als 30 Gew. % beträgt.

Beispiele für funktionelle Monomere sind ethylenisch ungesättigte Säuren, wie Mono- oder Dicarbonsäuren, Sulfonsäuren oder Phosphonsäuren. Anstelle der freien Säuren können auch deren Salze, vorzugsweise Alkali- oder Ammoniumsalze eingesetzt werden.

Beispiele dafür sind Acrylsäure, Methacrylsäure, Crotonsäure, Maleinsäure, Fumarsäure, Itaconsäure, Vinylsulfonsäure, Vinylphosphonsäure, Styrolsulfonsäure, Halbester der Malein- bzw. Fumarsäure und der Itaconsäure mit einwertigen aliphatischen gesättigten Alkoholen der Kettenlänge C₁-C₁₈ sowie deren Alkali- und Ammoniumsalze oder (Meth)acrylsäureester von Sulfoalkanolen, beispielsweise Natrium-2-sulfoethylmethacrylat.

Weitere Beispiele für funktionelle Monomere sind ethylenisch ungesättigte Monomere, die wenigstens eine Amid-, Epoxy-, Hydroxy-, N-Methylol-, Trialkoxysilan- oder Carbonylgruppe aufweisen.

Besonders vorteilhaft sind dabei ethylenisch ungesättigte Epoxidverbindungen, wie Glycidylmethacrylat oder Glycidylacrylat; ethylenisch ungesättigte N-Methylolverbindungen, wie N-Methylolacrylat oder -methacrylat; oder die Methacrylsäure- und Acrylsäure-C₁-C₉-Hydroxyalkylester, wie n-Hydroxyethyl-, n-Hydroxypropyl- oder n-Hydroxybutylacrylat und -methacrylat; sowie Ver-bindungen, wie Diacetonacrylamid und Acetylacetoxyethylacrylat bzw. -methacrylat; oder Amide ethylenisch ungesättigter Carbonsäuren, wie Acrylamid oder Methacrylamid. Besonders bevorzugt wird eine Kombination von Acrylamid mit N-Methylolacrylamid eingesetzt. Diese VAE-Copolymeren zeichnen sich durch eine besonders geringe Tendenz zur Formaldehydabspaltung aus.

Beispiele für nicht-funktionelle Monomere sind Vinylester, die nicht Vinylacetat sind. Beispiele dafür sind Vinylester von ein bis achtzehn Kohlenstoffatome aufweisenden Monocarbonsäuren, wie Vinylformiat, Vinylpropionat, Vinylbutyrat, Vinylisobutyrat, Vinylbenzoat, Vinyl-2-ethylhexanoat, Vinylester von α-verzweigten Carbonsäuren mit 5 bis 11 Kohlenstoffatomen im Säurerest (^{®}Versaticsäuren), Vinylester der Pivalin-, 2-Ethylhexan-, Laurin-, Palmitin-, Myristin- und Stearinsäure. Vinylester von Versaticsäuren, insbesondere VeoVa® 9, VeoVa® 10 und VeoVa® 11, sind bevorzugt.

Weitere Beispiele für nicht-funktionelle Monomere sind alpha-Olefine, die nicht Ethylen sind, oder Vinylaromaten. Beispiele dafür sind Propylen, 1-Butylen, 2-Butylen, Styrol oder α-Methylstyrol.

Weitere Beispiele für nicht-funktionelle Monomere sind Ester von ethylenisch ungesättigten Monocarbonsäuren oder Diester von ethylenisch ungesättigten Dicarbonsäuren. Vorzugsweise handelt es sich dabei um Ester von Alkoholen mit ein bis achtzehn Kohlenstoffatomen. Beispiele für solche nicht-funktionellen Monomere sind Methylmethacrylat oder -acrylat, Butyl-methacrylat oder -acrylat, 2-Ethylhexylmethacrylat oder -acrylat, Dibutylmaleinat oder Dioctylmaleinat.

Eine besonders bevorzugte Vinylacetat-Ethylen-Copolymerdispersion leitet sich von einem Vinylacetat-Ethylen-Copolymer ab, das durch Emulsionspolymerisation von Vinylacetat und Ethylen sowie gegebenenfalls mindestens einem weiteren damit copolymerisierbaren Monomer in Gegenwart mindestens eines nichtionischen Emulgators und/oder mindestens eines anionischen Emulgators erhalten wurde, wobei gegebenenfalls bis zu 2 Gew. %, bezogen auf Gesamthauptmonomer (= Vinylacetat, Ethylen und gegebenenfalls verwendetes nicht-funktionelles Monomer) eines molekular oder dispers in Wasser löslichen Polymeren anwesend sein kann.

Bevorzugt eingesetzte Emulgatoren sind dabei nichtionische Emulgatoren mit Alkylenoxidgruppen und/oder anionische Emulgatoren mit Sulfat-, Sulfonat-, Phosphat- und/oder Phosphonatgruppen, die gegebenenfalls zusammen mit molekular oder dispers in Wasser löslichen Polymeren, vorzugsweise zusammen mit Polyvinylalkohol, eingesetzt werden.

Eine andere bevorzugte Variante der erfindungsgemäßen VAE-Dispersionen enthält Vinylacetat-Ethylen-Copolymere, die zusätzlich 0,5 bis 20 Gewichtsteile von Estern der Acrylsäure und/oder von Estern der Methacrylsäure und/oder von Diestern der Maleinsäure mit einwertigen gesättigten Alkholen, insbesondere Butylacrylat (BuA) und/oder 2 Ethylhexylacrylat (2-EHA) und/oder Dibutylmaleinat und/oder Dioctylmaleinat, einpolymerisiert erhalten.

Der Feststoffanteil der erfindungsgemäßen VAE-Copolymerdispersionen beträgt typischerweise 40 bis 70 Gew.-%, vorzugsweise 45 bis 60 Gew. %, bezogen auf die Gesamtmasse der Dispersion, besonders bevorzugt zwischen 48 und 55 %. Diese Dispersionen können bei der Anwendung verdünnt werden, wobei sich die Viskosität entsprechend ändert.

Die erfindungsgemäße VAE-Copolymerdispersion enthält Emulgatoren, insbesondere nichtionische Emulgatoren E1 und/oder anionische Emulgatoren E2. Werden Kombinationen von nichtionischen Emulgatoren mit anionischen Emulgatoren eingesetzt, so beträgt das Verhältnis von E1 : E2 üblicherweise 1:1 bis 50 : 1. Die VAE-Copolymerdispersion kann zusätzlich geringe Mengen an polymeren Stabilisatoren (Schutzkolloide) enthalten.

Beispiele für nichtionische Emulgatoren E1 sind Acyl-, Alkyl-, Oleyl- und Alkylaryloxethylate. Diese Produkte sind beispielsweise im Handel unter der Bezeichnung Genapol®, Lutensol® oder Emulan® erhältlich. Hierunter fallen beispielsweise ethoxilierte Mono-, Di- und Tri-Alkylphenole (EO-Grad: 3 bis 50, Alkylsubstituentenrest: C₄ bis C₁₂) sowie ethoxilierte Fettalkohole (EO-Grad: 3 bis 80; Alkylrest: C₈ bis C₃₆), speziell C₁₂-C₁₄-Fettalkohol(3-40)ethoxilate, C₁₃C₁₅-Oxoalkohol(3-40)ethoxilate, C₁₆C₁₈-Fettalkohol(11-80)ethoxilate, C₁₀-Oxoalkohol(3-40)ethoxilate, C₁₃-Oxoalkohol(3-40)ethoxilate, Polyoxyethylensorbitanmonooleat mit 20 Ethylenoxidgruppen, Copolymere aus Ethylenoxyd und Propylenoxyd mit einem Mindestgehalt von 10 Gew.-% Ethylenoxid, die Polyethylenoxid(4-40)-Ether von Oleylalkohol sowie die Polyethenoxid(4-40)-Ether von Nonylphenol. Besonders geeignet sind die Polyethylenoxid(4-40)-Ether von Fettalkoholen, insbesondere von Oleylalkohol, Stearylalkohol oder C₁₁ Alkylalkoholen.

An nichtionischen Emulgatoren E1 werden typischerweise 1 bis 8 Gew.%, vorzugsweise 1 bis 5 Gew.%, besonders bevorzugt 1 bis 4 Gew. %, bezogen auf die Gesamthauptmonomermenge, verwendet. Es lassen sich auch Gemische von nichtionischen Emulgatoren einsetzen.

Beispiele für anionische Emulgatoren E2 sind Natrium-, Kalium- und Ammoniumsalze von geradkettigen aliphatischen Carbonsäuren der Kettenlänge C₁₂-C₂₀, Natriumhydroxyoctadecansulfonat, Natrium-, Kalium- und Ammoniumsalze von Hydroxyfettsäuren der Kettenlänge C₁₂-C₂₀ und deren Sulfonierungs- bzw. Sulfatierungs- und/oder Acetylierungsprodukte, Alkylsulfate, auch als Triethanolaminsalze, Alkyl-(C₁₀-C₂₀)-sulfonate, Alkyl(C₁₀-C₂₀)-arylsulfonate Dimethyldialkyl(C₈-C₁₈)-ammoniumchlorid, und ihre Sulfierungsprodukte, Ligninsulfonsäure sowie deren Calcium-, Magnesium-, Natrium- und Ammoniumsalze, Harzsäuren, hydrierte und dehydrierte Harzsäuren sowie deren Alkalisalze, dodecyliertes Diphenyletherdisulfonsaures Natrium, Natriumlaurylsulfat, sulfatierte Alkyl- oder Arylethoxylate mit einem Ethoxylierungsgrad zwischen 1 und 10, beispielsweise ethoxyliertes Natriumlaurylethersulfat (EO-Grad 3) oder ein Salz eines Bisesters, vorzugsweise eines Bis-C₄-C₁₈-Alkylesters, einer sulfonierten Dicarbonsäure mit 4 bis 8 Kohlenstoffatomen oder ein Gemisch dieser Salze, vorzugsweise sulfonierte Salze von Estern der Bernsteinsäure, besonders bevorzugt um Salze, wie Alkalimetallsalze, von Bis-C₄-C₁₈-Alkylestern sulfonierter Bernsteinsäure, oder Phosphate von polyethoxylierten Alkanolen oder Alkylphenolen.

Besonderes bevorzugt werden Emulgatoren eingesetzt, welche keine Alkylphenylethoxylate enthalten.

An anionischen Emulgatoren E2 werden typischerweise 0,1 bis 3 Gew.%, vorzugsweise 0,1 bis 2 Gew.%, besonders bevorzugt 0,5 bis 1,5 Gew. %, bezogen auf die Gesamthauptmonomermenge, verwendet. Es lassen sich auch Gemische von anionischen Emulgatoren einsetzen.

Es lassen sich auch Gemische von nichtionischen und anionischen Emulgatoren einsetzen. Der Gewichtsanteil von Emulgatoren E1 zu E2 kann in weiten Bereichen schwanken, beispielsweise zwischen 50:1 und 1:1.

Zusätzlich zu den während der Emulsionspolymerisation eingesetzten Emulgatoren und gegebenenfalls Schutzkolloiden können die erfindungsgemäßen VAE-Copolymerdispersionen noch nachträglich zugesetzte wasserlösliche oder wasserdispergierbare Polymere und/oder nachträglich zugesetzte Emulgatoren enthalten.

Typischerweise beträgt der Gesamtanteil an Emulgatoren, bezogen auf die Gesamtmonomermenge, 1 bis 8 Gew.%, vorzugsweise 1 bis 6 Gew.%, besonders bevorzugt 1 bis 4 Gew. %.

Neben Emulgatoren können die erfindungsgemäßen Vinylester-Ethylen-Copolymer-dispersionen Schutzkolloide, vorzugsweise Polyvinylalkohole und/oder deren Modifikationen, enthalten. Schutzkolloide - falls anwesend - liegen in der Regel nur in vergleichsweise geringen Konzentrationen vor, beispielsweise in bis zu 2 Gew. %, bezogen auf die Gesamtmenge der eingesetzten Hauptmonomeren. Vorzugsweise enthalten die erfindungsgemäß eingesetzten Vinylesterpolymerdispersionen keine oder bis zu 1 Gew. %, bezogen auf die Gesamtmenge der eingesetzten Hauptmonomeren, an Schutzkolloiden.

Bei den Schutzkolloiden handelt es sich um wasserlösliche oder wasserdispergierbare Polymere, die während der Emulsionspolymerisation anwesend sind und die entstehende Dispersion stabilisieren. Emulgatoren sind niedermolekulare Verbindungen, welche die Emulsion sowie das entstandene Produkt stabilisieren.

Beispiele für Schutzkolloide sind wasserlösliche oder wasserdispergierbare polymere modifizierte Naturstoffe, wie Celluloseether, z.B. Methyl-, Ethyl-, Hydroxyethyl- oder Carboxymethylcellulose; wasserlösliche oder wasserdispergierbare polymere synthetische Substanzen, wie Polyvinylpyrrolidon oder Polyvinylalkohole oder deren Copolymere (mit oder ohne Restacetylgehalt), teilweise veresterter oder acetalisierter oder mit gesättigten Resten veretherter Polyvinylalkohol.

Die Schutzkolloide können einzeln oder in Kombination eingesetzt werden. Im Falle von Kombinationen unterscheiden sie sich jeweils in ihren Molekulargewichten oder sie unterscheiden sich in ihren Molekulargewichten und ihrer chemischen Zusammensetzung wie zum Beispiel dem Hydrolysegrad.

Bevorzugt werden Polyvinylalkohole eingesetzt; diese können in irgendeiner Art hydrophob bzw. hydrophil modifiziert worden sein.

Gegebenenfalls können die erfindungsgemäßen VAE-Copolymerdispersionen noch weitere für die Formulierung von Bindemitteln bzw. Klebstoffen an sich übliche Zusätze enthalten.

Dazu zählen beispielsweise Filmbildehilfsmittel, wie Testbenzin, Texanol^{®}, TxiB^{®}, Butylglykol, Butyldiglykol, Butyldipropylenglykol und Butyltripropylenglykol; Netzmittel, wie AMP 90^{®}, TegoWet.280^{®}, Fluowet PE^{®}; Verdicker, wie Polyacrylate oder Polyurethane, wie Borchigel L75^{®} und Tafigel PUR 60^{®}; Entschäumer, z.B. Mineralöl- oder Silikonentschäumer; UV-Schutzmittel, wie Tinuvin 1130^{®}; Mittel zum Einstellen des pH-Wertes; Konservierungsmittel; nachträglich zugesetzte stabilisierenden Polymere, wie Polyvinylalkohol oder Celluloseether, Füllstoffe, wie Kreide oder Calciumcarbonat, Pigmente, wie Ruß, und andere Additive und Hilfsmittel, wie sie zur Formulierung von Bindemitteln oder Klebstoffen üblich sind verwendet werden.

Der Anteil dieser Zusätze in den erfindungsgemäßen VAE-Dispersionen kann in weiten Bereichen schwanken und wird vom Fachmann in Hinblick auf das gewünschte Anwendungsgebiet ausgewählt.

Bei der Anwendung als Beschichtungsmittel für Fußbodenbeläge können z.B. weitere auf diesem Gebiet bekannte Latices, z.B. SBR-Dispersionen, mit der erfindungsgemäßen Dispersion kombiniert werden. Der Anteil dieser zusätzlichen Dispersionen kann bis zu 30 Gew. % betragen.

Ferner ist hervorzuheben, dass die erfindungsgemäße Dispersion mit einem hohen Füllstoff- oder Pigmentgehalt formuliert werden kann. So lassen sich typischerweise bis zu 80 Gew. % an diesen Feststoffen in die Dispersion einbringen.

Weichmacher sind in den erfindungsgemäßen VAE-Copolymerdispersionen in der Regel nicht enthalten, obgleich die Anwesenheit geringer Anteile nicht ausgeschlossen ist.

Bevorzugte erfindungsgemäßen VAE-Copolymerdispersionen zeichnen sich durch einen sehr geringen Gehalt an VOC aus, insbesondere VOC-Gehalte von weniger als 1000 ppm, besonders bevorzugt kleiner als 500 ppm, bezogen auf die Gesamtmasse der Dispersion. Unter VOC sind im Rahmen dieser Beschreibung organische Substanzen zu verstehen, die einen Siedepunkt von kleiner als 250°C aufweisen und die keine Säurefunktion aufweisen.

Die erfindungsgemäßen VAE-Copolymerdispersionen werden durch radikalische Emulsionspolymerisation der Monomeren in Gegenwart mindestens eines Emulgators hergestellt. Beispiele dafür sind oben aufgezählt.

Die Herstellung wässriger Polymerdispersionen ist vielfach vorbeschrieben und dem Fachmann daher bekannt [vgl. z.B. Encyclopedia of Polymer Science and Engineering, Vol. 8, S. 659 ff (1987)].

Die Emulsionspolymerisation kann beispielsweise als Batchverfahren unter Vorlage der Gesamtmenge an Monomeren zu Beginn der Polymerisation erfolgen; alternativ kann ein Zulaufverfahren eingesetzt werden, bei dem der Zusatz der Monomeren während der Polymerisation durch kontinuierlichen Zulauf erfolgt; es kann aber auch ein Teil der Monomeren, z.B. bis zu 50 Gew. %, vorzugsweise bis zu 25 Gew. %, zu Beginn vorgelegt werden, und der Rest während der Polymerisation zugeführt werden.

Das mit kontinuierlichem Zulauf und bis zu 25 % Monomervorlage durchgeführte Verfahren ist besonders einfach und lässt sich in kurzer Polymerisationszeit durchführen, beispielsweise in Zeiten von 1 bis 4 Stunden.

Die Polymerisation kann auch in an sich bekannter Weise in mehreren Stufen mit unterschiedlichen Monomerkombinationen oder in unterschiedlichen Druckstufen erfolgen, wobei Polymerdispersionen mit Teilchen heterogener Morphologie entstehen.

Die Polymerisation der ethylenisch ungesättigten Monomeren erfolgt in Gegenwart mindestens eines Initiators für die radikalische Polymerisation der ethylenisch ungesättigten Monomeren.

Als Initiatoren für die radikalische Polymerisation zum Starten und Weiterführen der Polymerisation während der Herstellung der Dispersionen kommen alle bekannten Initiatoren in Betracht, die in der Lage sind, eine radikalische, wässrige Polymerisation in Heterophasensystemen zu starten.

Es kann sich dabei um Peroxide, wie z.B. Alkalimetall- und/oder Ammoniumperoxodisulfate oder um Azoverbindungen, insbesondere um wasserlösliche Azoverbindungen, handeln.

Als Polymerisationsinitiatoren können auch sogenannte Redoxinitiatoren verwendet werden. Beispiele dafür sind tert.-Butylhydroperoxid und/oder Wasserstoffperoxid in Kombination mit Reduktionsmitteln, wie mit Schwefelverbindungen, z.B. dem Natriumsalz der Hydroxymethansulfinsäure, Brüggolit FF6 und FF7, Rongalit C, Natriumsulfit, Natriumdisulfit, Natriumthiosulfat und Acetonbisulfitaddukt, oder mit Ascorbinsäure oder mit reduzierenden Zuckern.

Die Menge der im Verfahren eingesetzten Initiatoren oder Kombinationen von Initiatoren bewegt sich im Rahmen der für wässrige Polymerisationen in Heterophasensystemen üblich ist. In der Regel wird die Menge des eingesetzten Initiators 5 Gew. %, bezogen auf die Gesamtmenge der zu polymerisierenden Monomeren, nicht überschreiten.

Vorzugsweise beträgt die Menge der eingesetzten Initiatoren, bezogen auf die Gesamtmenge der zu polymerisierenden Monomeren, 0,05 bis 2,0 Gew. %.

Dabei kann die Gesamtmenge an Initiator bereits zu Beginn der Polymerisation vorgelegt werden oder bevorzugt wird ein Teil des Initiators zu Beginn vorgelegt und der Rest wird nach dem Starten der Polymerisation in ein oder mehreren Schritten oder kontinuierlich zugegeben. Die Zugabe kann getrennt erfolgen oder zusammen mit anderen Komponenten, wie Emulgatoren oder Monomeremulsionen.

Es ist auch möglich, die Emulsionspolymerisation unter Verwendung eines Saatlatex zu starten, beispielsweise unter Vorlage von 0,5 bis 15 Gew. % einer Dispersion.

Das Molekulargewicht der Polymerisate der wässrigen VAE-Dispersionen kann durch Zugabe geringer Mengen einer oder mehrerer das Molekulargewicht regelnder Substanzen eingestellt werden. Diese sogenannten Regler werden im allgemeinen in einer Menge von bis zu 2 Gew. %, bezogen auf die zu polymerisierenden Monomeren, eingesetzt. Als Regler können alle dem Fachmann bekannten Substanzen eingesetzt werden. Bevorzugt sind z.B. organische Thioverbindungen, Silane, Allylalkohole und Aldehyde.

Die Polymerisationstemperatur beträgt im allgemeinen 20 bis 150 °C und bevorzugt 50 bis 120°C.

Die Polymerisation findet üblicherweise unter Druck statt, bevorzugt zwischen 2 und 150 bar, besonders bevorzugt 2 bis 35 bar.

Im Anschluss an die eigentliche Polymerisationsreaktion kann es wünschenswert und/oder erforderlich sein, die erhaltene wässrige Vinylesterpolymerdispersion weitgehend frei von Geruchsträgern, wie z.B. Restmonomeren und anderen flüchtigen, organischen Bestandteilen zu gestalten. Dies kann in an sich bekannter Weise beispielsweise physikalisch durch destillative Entfernung (insbesondere über Wasserdampfdestillation) oder durch Abstreifen mit einem inerten Gas erreicht werden. Ferner kann die Absenkung der Restmonomeren auch chemisch durch radikalische Nachpolymerisation, insbesondere durch Einwirkung von Redoxinitiatorsystemen, wie sie z.B. in der DE-A-4,435,423 beschrieben sind, erfolgen. Bevorzugt ist eine Nachpolymerisation mit einem Redoxinitiatorsystem aus mindestens einem organischen Peroxid sowie einem organischen und/oder anorganischen Sulfit und/oder Sulfinsäurederivaten.

Besonders bevorzugt ist eine Kombination aus physikalischen und chemischen Methoden, wobei nach einer Absenkung des Restmonomer-Gehaltes durch chemische Nachpolymerisation die weitere Absenkung des Restmonomergehaltes mittels physikalischer Methoden auf vorzugsweise <2000 ppm, besonders bevorzugt <1000 ppm, insbesondere <100 ppm erfolgt.

Die Polymerisation wird üblicherweise bei einem pH-Wert im Bereich von kleiner / gleich 9 durchgeführt. Zur Einstellung des pH-Wertes der VAE-Copolymerdispersion können prinzipiell Puffersysteme, wie beispielsweise Natriumacetat oder Phosphatpuffersysteme, verwendet werden.

Bevorzugt ist ein pH-Bereich von 2 bis 9 günstig, bevorzugt ist ein pH-Wert im Bereich zwischen 3 und 8.

Die erfindungsgemäße VAE-Copolymerdispersion lässt sich bevorzugt als Bindemittel für textile Flächengebilde, insbesondere als Bindemittel für Teppiche, Teppichfliesen oder Gurte, oder zum Verkleben verschiedenster Schichten von textilen Flächengebilden, insbesondere von Teppichen, Teppichfliesen oder Gurten, einsetzen.

Es hat sich gezeigt, dass die erfindungsgemäß eingesetzten Dispersionen eine gute Verträglichkeit mit Pigmenten und Füllstoffen aufweisen.

Die Erfindung betrifft weiterhin ein textiles Flächengebilde, das mit der oben beschriebenen VAE-Copolymerdispersion behandelt ist.

Unter Behandlung im Sinne der vorliegenden Beschreibung ist ein Imprägnieren und/oder ein Beschichten des textilen Flächengebildes zu verstehen. Die VAE-Copolymerdispersion kann dabei in einem Extremfall vollständig in das textile Flächengebilde eindringen und dieses durchgehend imprägnieren, wobei der Binder mit den Textilfasern physikalische und/oder chemische Wechselwirkungen eingeht. In einem anderen Extremfall bildet die VAE-Copolymerdispersion auf einer Oberfläche des textilen Flächengebildes eine separate Schicht aus, dringt dabei aber teilweise auch in das textile Flächengebilde ein und bildet mit den Textilfasern physikalische und/oder chemische Wechselwirkungen aus. Zwischen diesen beiden Extremfällen sind sämtliche Übergangsformen möglich.

Die Behandlung kann während der Herstellung des textilen Flächengebildes erfolgen, beispielsweise um einen unverfestigten Vliesstoff zu stabilisieren und/oder nachträglich kann auf mindestens einer Seite des texilen Flächengebildes eine Beschichtung sowie eine Teilimprägnierung erfolgen. Soll das textile Flächengebilde als Fußbodenbelag, z.B. Teppich oder als Teppichfliese, oder als Gurt eingesetzt werden, so erfolgt diese Beschichtung sowie Teilimprägnierung von der Seite, welche der Trittseite bzw. der dem Benutzer zugewandten Seite abgewandt ist; außerdem ist bei dieser Anwendung vorzugsweise mindestens eine sekundäre Rückenschicht vorgesehen.

Die Erfindung betrifft daher vorzugsweise einen Textilverbundstoff umfassend ein textiles Flächengebilde, das mit der oben beschriebenen Vinylester-Ethylen-Copolymerdispersion beschichtet und teilimprägniert ist und das auf der damit beschichteten Seite mit mindestens einer weiteren Rückenschicht verbunden ist.

Die VAE-Dispersionen lassen sich vorteilhafterweise bei der Herstellung von Webteppichen oder von getufteten Teppichen einsetzen. Bei dieser Technik wird die Emulsion in unverdünnter oder in verdünnter Form auf der Rückseite eines geweben oder getufteten Flächengebildes aufgebracht. Nach dem Trocknen verleiht das Polymer dem Teppich eine ausgezeichnete Tuftbindung, Dimensionsstabilität und verbesserte Lageeigenschaften.

Die Erfindung betrifft daher vorzugsweise ein textiles Flächengebilde in der Form eines Webteppichs oder eines getufteten Teppichs, das auf der von der Trittseite abgewandten Seite mit der oben beschriebenen VAE-Dispersion beschichtet und teilimprägniert ist.

Bei dieser Variante werden vorzugsweise textile Flächengebilde mit einem Flächengewicht von 1000 bis 3000 g/m², vorzugsweise von 1200 bis 2500 g/m² eingesetzt.

Die VAE-Dispersionen lassen sich auch für die Verklebung einer sekundären Rückenbeschichtung von Teppichen einsetzen. Dazu wird die Emulsion auf die sekundäre Rückenbeschichtung aufgetragen und anschließend mit der textilen Fläche, welche die Trittfläche bildet, kombiniert.

Die Erfindung betrifft außerdem vorzugsweise ein textiles Flächengebilde in der Form eines Teppichs, bei dem eine textile Fläche auf der von der Trittseite abgewandten Seite mit einer sekundären Rückenbeschichtung verklebt ist, wobei die Verklebung zwischen beiden Schichten durch die oben beschriebene VAE-Dispersion erfolgt ist.

Eine weitere Anwendung der VAE-Dispersionen betrifft deren Einsatz beim Herstellen von Teppichen aus schweren Nonwovens für den zeitweisen Gebrauch. In dieser Anwendung wird ein Nonwoven mit hohem Flächengewicht mit der VAE-Dispersion vollständig imprägniert. Nach dem Trocknen erhält man ein Produkt mit sehr guter Lebensdauer, Dimensionsstabilität und Haptik.

Die Erfindung betrifft außerdem vorzugsweise ein textiles Flächengebilde in der Form eines Teppichs, bei dem eine textile Fläche auf der Basis eines schweren Nonwovens mit der oben beschriebenen VAE-Dispersion imprägniert ist. Bei dieser Variante werden vorzugsweise Nonwovens mit einem Flächengewicht von 200 bis 600 g/m², vorzugsweise von 250 bis 500 g/m² eingesetzt.

Noch eine weitere Anwendung der VAE-Dispersionen betrifft deren Einsatz beim Herstellen von Gurten, insbesondere solchen für die Transportsicherung. Die VAE-Dispersion verleiht den Gurten eine ausreichende Steifigkeit und dient zur Fixierung von Pigmenten. Diese Gurte werden in der Transportindustrie eingesetzt, z.B. um Lasten auf Lastkraftwagen während des Transports zu sichern.

Die Erfindung betrifft außerdem vorzugsweise ein textiles Flächengebilde in der Form eines Gurtes, bei dem eine textile Fläche mit der oben beschriebenen VAE-Dispersion imprägniert ist, vorzugsweise mit einer Füllstoff- und/oder Pigmenten enthaltenden VAE-Dispersion.

Bei dieser Variante werden vorzugsweise textile Flächengebilde mit einem Flächengewicht von 500 bis 3000 g/m², vorzugsweise von 1000 bis 2000 g/m² eingesetzt.

Als textile Flächengebilde lassen sich unterschiedlichste Typen einsetzen. Beispiele dafür sind Vliesstoffe, Gewebe, Gelege oder Gewirke. Vorteilhafterweise lassen sich auch Florstoffe einsetzen; diese sind auf der dem Flor abgewandten Seite mit der erfindungsgemäßen VAE-Copolymerdispersion beschichtet und teilimprägniert. Insbesondere werden getuftete Florstoffe eingesetzt; diese können offene und/oder geschlossene Schlingen aufweisen.

Ein Typ moderner Fussbodenbeläge ist aus einem Grundgewebe und einem damit verbundenen Flor gefertigt. Der Flor ist mit dem Grundgewebe verbunden und bedeckt dieses auf der Trittseite. Auf der dem Flor abgewandten Seite sind diese textilen Flächengebilde mit einer Rückenschicht versehen. Diese dient einerseits dem Fixieren des Flors im Grundgewebe und bestimmt andererseits den Trittkomfort massgeblich. Textile Fussbodenbeläge der vorgehen beschreibenen Art werden im Handel allgemein als "Teppichboden" bezeichnet, wobei derartiger Teppichboden sowohl als Bahnenware als auch in der Form von Teppichfliesen verkauft und verlegt wird. Textile Fussbodenbeläge können gewebt, getuftet oder nach der Nadelfilztechnik hergestellt werden. Bei den Web- und Tufting-Tepichen unterscheidet man Konstruktionen mit geschlossenen Schlingen, z.B. Bouclé-Teppiche, oder Konstruktionen mit aufgeschnittenen Flornoppen, z.B. Velour-Teppiche. Bei den Tufting Teppichen wird die Textilfaser, in der Regel Polyamid, nach dem Tuftingverfahren gemäß dem Nähmaschinenprinzip in das fertige Grundgewebe eingesetzt. Das Grundgewebe sorgt dabei für eine Dimensionstabilität und der Flor für das Aussehen und einen Teil desTrittkomforts.

Die vorgenannten Textilverbundstoffe werden darüber hinaus in an sich bekannter Weise rückseitig mit Schichten aus flexiblem Kunststoff versehen. Eine dieser Schichten, primäre Rückenschicht genannt, dient hauptsächlich dem Fixieren der in das Grundgewebe eingebrachten Textilfasern oder dem Fixieren des textilen Flächengebildes. Für diesen Zweck wurden in der Vergangenheit bereits Binder auf der Basis von VAE-Copolymerdispersionen eingesetzt. Eine weitere Kunststoffschicht, sekundäre Rückenschicht genannt, beispielsweise aus Naturkautschuk, aus Styrol-Butadien-Latices, aus Polyvinylchlorid oder aus Polyurehanen, ist im allgemeinen zwischen 2 und 8 mm dick und trägt aufgrund ihrer elastomeren Eigenschaft wesentlich zum Trittkomfort bei. Die vorgenannte sekundäre Rückenschicht wird in der Regel geschäumt und ergibt dann einen sogenannten Schaumrücken. Nebern dem bereits genannten Trittkomfort sorgt der Schaumrücken auch für eine Temperatur- und Schallisolation und besizt im allgemeinen auch eine relativ gute Lebensdauer. Die sekundäre Rückenschicht wird in der Regel mit dem textilen Flächengebilde durch Laminieren verbunden. Dazu kann kann beispielsweise eine direkte Verbindung mit der primären Rückenschicht erfolgen oder es kann eine Klebschicht zwischen primärer und sekundärer Rückenschicht angebracht werden.

Als sekundäre Rückenschicht können übliche Materialien eingesetzt werden. Beispiele dafür sind Schaum- oder Kompaktschaumrücken oder Vliesstoffe, welche gegebenenfalls mit weiteren textilen Flächengebilden, wie Gewebe oder Gewirke, verbunden oder vermascht sind, wodurch die Rückenschicht in Längs- oder in Längs- und Querrichtung verstärkt wird. Das sekundäre Rückenschicht wird bei Bedarf elektrostatisch ableitfähig ausgerüstet und kann entsprechend in Haptik und Optik textil gestaltet werden.

Um einen ausreichenden Trittkomfort je nach Verlegesituation zu erzielen, werden üblicherweise sekundäre Rückenschichten mit einem Flächengewicht von 100 bis 900 g/m² und einer Dicke von 0,5 bis 10 mm eingesetzt.

Um die erfindungsgemäße textile Fläche kann in fachüblicher Weise modifiziert und an den gewünschten Verwendungszweck angepasst werden. So werden Teppiche in der Regel antistatisch ausgerüsten, indem diese mit leitfähigen Fasern durchmischt werden, die eine Herabsetzung des Oberflächen-Widerstandes bewirken.

Die erfindungsgemäße textile Fläche kann grundsätzlich in verschiedener Weise hergestellt werden. Dem Fachmann sind die Herstellungsweisen von textilen Flächen bekannt.

Generell können alle Typen von Fasern und Fasermischungen genutzt werden. Geht man beispielsweise von der üblichen Herstellung von Spinnfaservliesen aus, so wird dieser in den Prozeßstufen "Öffnen - Mischen - Feinöffnen - Vliesbildung - Verfestigen" in eine handelsfähige Ware übergeführt.

Weiterhin kann für die Herstellung der erfindungsgemäßen textile Fläche sowohl ein unverfestigter als auch ein verfestigter Vliesstoff eingesetzt werden. Ein unver-festigter Vliesstoff kann mittels eines Nähwirkverfahrens, z. B. durch das sogenannte Maliwatt-Verfahren, verfestigt werden. Es ist auch möglich, einen bereits verfestigten Vliesstoff zu verarbeiten, der z. B. durch mechanische, chemische oder thermische Verfahrensschritte verfestigt wurde.

Als Vliesstoffe eignen sich neben den Spinnfaservliesen auch sogenannte Filamentvliese, die unterteilt werden in durch abgelegte Filamente (Endlosfasern) gebildete Vliesstoffe, sogenannte Spunbonds, oder aber durch abgelegte Fasern nach dem Melt-Blown-Prinzip gebildete Vliesstoffe. Auch hier kann das Verfestigen der Vliesstoffe nach den bereits beschriebenen Methoden erfolgen.

Eine besonders kostengünstige Variante eines Vliesstoffes stellen textile Flächen aus Bändchenmaterial dar. Bändchenmaterial, das in der Textiltechnik bekannt ist und in vielen Fällen eingesetzt wird, wird in der Regel nach dem Flachfolienextrusionsverfahren hergestellt, wobei die extrudierte Flachfolie in Bändchen entsprechender Breite geschnitten wird. Als Rohstoffe kommen sowohl Polyolefine, Polyamide und Polyester infrage, also dieselben Materialien, aus denen auch der Vliesstoff hergestellt sein kann.

Der Vliesstoff kann auch mit einem weiteren textilen Flächengebilde, beispielsweise einem Gewebe oder Gewirke aus Filamentgarn oder aus Fasergarn verbunden sein. Unter Filamentgarn versteht man ein Garn, das aus mehreren Endlosfäden mit oder ohne Drehung besteht, wobei die Endlosfäden auch eine texturierte Form haben können. Bei letzteren wird in einem Texturierprozeß dem ansonsten sehr glatten Filamentgarn ein textiles Aussehen verliehen, indem man dem Filamentgarn einen hohen Bausch verleiht. Auch hier können als Rohstoffe sowohl Polyolefine als auch Polyamide oder Polyester verwendet werden.

Unter Fasergarnen, insbesondere Stapelfasergarnen, werden solche verstanden, die aus Fasern entsprechender Länge hergestellt werden, die in der Regel nach dem Ringspinn- oder dem Rotorspinn-Verfahren hergestellt werden. Auch hier eignen sich Polyolefine, wie Polypropylen oder Polyethylen, Polyamide und Polyester als Rohstoffe.

Die Erfindung betrifft auch die Verwendung der oben beschriebenen VAE-Copolymerdispersion zur Behandlung von textilen Flächengebilden, insbesondere von solchen, die bei der Herstellung von Fußbodenbelägen oder Gurten eingesetzt werden. Bei diesen Anwendungen ist eine asugezeichnete Dimensionsstabilität gefordert.

Die nachfolgenden Beispiele erläutern die Erfindung ohne diese zu begrenzen.

### Messmethoden

### Messung der Partikelgrößenverteitung

Die Partikelgröße wurde mit Hilfe der Laser-Aerosol-Spektroskopie bestimmt. Sie ist in der Publikation "Kunstharz Nachrichten 28, Characterization and quality assurance of polymer dispersions, Oktober 1992, Dr. J. Paul Fischer" beschrieben. Die Methode verwendet als Lichtquelle einen Nd:YVO4 Laser (Millenia II) der Firma Spectra Physics mit einer Laserstärke von 2 W und einer Wellenlänge von 532 nm. Als Detektor wird eine Bialkali Photokathode Typ 4517 der Firma Burle (ehemals RCA) verwendet. Die Streustrahlung der zuvor sprühgetrockneten Einzelteilchen wurde in einem Winkel von 40° detektiert. Die Signalauswertung findet mit einem Mehrkanalanalysator der Firma TMCA mit 1024 Kanälen statt.

Als Probenvorbereitung wurden 0,2 ml der zu untersuchenden Probe in 100 ml hochreinem Wasser mit einer Leitfähigkeit von 18,2 µS/m verdünnt. Die Probe wurde über eine Beckmann-Düse versprüht und mit Stickstoff getrocknet. Die dabei entstehenden Einzelpartikel mit Betastrahlung (Kr-85) neutralisiert und danach über das Einzelpartikellichtstreuexperiment untersucht. Als Ergebnis wurden die Zahlen- und Massenanteile der Verteilung im Bereich von 80 nm bis 550 nm berechnet und als Mittelwerte dₙ, d_{w}, d_{z} und d_{w}/dₙ ausgegeben.

### Glasübergangstemperatur

Die Messung der Glasübergangstemperatur wurde mit einem Mettler DSC 820 bei 10 K/min durchgeführt. Ausgewertet wurde die zweite Aufheizkurve.

### Zugfestigkeit, trocken und naß

Die Proben wurden durch Sättigung von Whatman Papier Nr. 1 bis zu einer Zugabemenge von 20 Gew. % an Emulsion hergestellt. Die Proben wurden vor dem Versuch 24 Stunden lang bei 23°C und bei 50 %iger relativer Feuchtigkeit konditioniert.

Whatman Papier wird üblicherweise bei Vergleichsversuchen für Polymerfilmanwendungen in Teppichen eingesetzt, da es ein sehr einheitliches Substrat darstellt. Es kann angenommen werden, dass die erhaltenen Ergebnisse einen Indikator für die Leistung bei Teppichanwendungen darstellen.

Die Prüfung der Zugfestigkeit erfolgte an einem Lloyd LR100K Gerät unter Verwendung eine 100 KN Belastungszelle. Dabei wurden folgende Testein-stellungen verwendet: Zuggeschwindigkeit: 100 mm pro Minute; 50 mm breites Probenstück; Abstand der Klemmbacken: 200 mm. Die Probe wurde bis zum Bruch gestreckt und es wurde die Kraft in N pro 50 mm aufgezeichnet. Die Ergebnisse wurden als Mittelwerte von vier Messungen mit dem gleichen Substrat dargestellt.

Für die Ermittlung der Zugfestigkeit an einer nassen Probe wurde der Test wie oben beschrieben durchgeführt mit der Änderung, dass die Probe vor dem Versuch eine Stunde lang in deionisiertes Wasser getaucht wurde.

### Wassertropfentest

Die Proben wurden durch Sättigung von Whatman Papier Nr. 1 bis zu einer Zugabemenge von 20 Gew. % an Emulsion hergestellt. Die Proben wurden vor dem Versuch 24 Stunden lang bei 23°C und bei 50 %iger relativer Feuchtigkeit konditioniert.

Ein Wassertropfen von 0,3 ml wurde durch eine Bürette auf die Probe aufgebracht und eine Stoppuhr wurde angestellt. Sobald der Wassertropfen verschwunden war, festgestellt durch visuelle Inspektion, wurde die auf der Stoppuhr angezeigte Zeit notiert und dieses als Ergebnis notiert. Hydrophile Bindemittel zeigen typischerweise Ergebnisse im Bereich von 1 bis 15 Minuten; hydrophobe Bindemittel zeigen Ergebnisse von mehr als 1 Stunde.

### Vergilbungstest

Die Proben wurden durch Sättigung von Whatman Papier Nr. 1 bis zu einer Zugabemenge von 20 Gew. % an Emulsion hergestellt. Die Proben wurden vor dem Versuch 24 Stunden lang bei 23°C und bei 50 %iger relativer Feuchtigkeit konditioniert.

Die Probe wurde in einem Mathis Lab Dryer für die gewünschte Zeitspanne (z.B. 1 Minute) der gewünschten Temperatur ausgesetzt (180°C bzw. 200°C) und das Ausmaß der Vergilbung wurde mit einem Minolta CM3600d Spektrophotometer bestimmt. Die Ergebnisse wurden in der Form des Vergilbungsindex nach DIN 6167 angegeben. Je höher die festgestellte Zahl war, umso stärker war die Vergilbung der Probe.

### Steifheit (Dimensionsstabilität)

Die Steifheit der Probe wurde mit einem Teppich, der mit einem Standard SBR Latex rückenbeschichtet war mit Hilfe der nachstehend beschriebenen Methode verglichen. Die Bindemitteldispersion wurde auf einen 25 %-igen Feststoffgehalt verdünnt und auf einen Webteppich aufgetragen (Axminstertyp auf der Basis von Polyester / Polyamid; Flächengewicht unbehandelt: 1600 g/m²). Die Auftragsmenge betrug jeweils 100 g/m² Festsubstanz. Die Probenstücke von 20 cm x 20 cm x 1 cm wurden 8 Minuten lang in einem Mathis Lab Dry Gerät bei 110°C getrocknet und die Steifheit und Biegefestigkeit wurde manuell ermittelt. Dabei wurde eine Skala von 1 bis 6 verwendet, wobei für sehr steife Proben eine 6 vergeben wurde und für sehr elastische Proben eine 1.

### Bruchverhalten bei 180

Die Bindemitteldispersion wurde auf einen 25 %-igen Feststoffgehalt verdünnt und auf einen Webteppich aufgetragen (Axminstertyp auf der Basis von Polyester / Polyamid; Flächengewicht unbehandelt: 1600 g/m²). Die Auftragsmenge betrug jeweils 100 g/m² Festsubstanz. Die 20 cm x 20 cm x 1 cm großen Probenstücke wurden 8 Minuten lang in einem Mathis Lab Dry Gerät bei 110°C getrocknet und das das Bruchverhalten wurde manuell durch das Gehör ermittelt. Das Bruchverhalten wurde mit "ja" oder "nein" charakterisiert.

### Potnoppenauszugskraft bei textilen Fußbodenbelägen (Tuft anchorage test)

Die zu untersuchenden textilen Bodenbelagsproben bestehen aus einer Mischung von Ziegenhaarwolle und Schafswolle im Verhältnis von 50 Gew. % zu 50 Gew. %. Der Binder (Dispersion) wird mit Wasser bis zu einem Feststoff von 25 % verdünnt und auf der Rückseite der textilen Bodenbelagsprobe manuel mit einem Schwamm gut verteilt aufgebracht. Dabei wird die Menge von 200 g Trockenpolymer pro Quadratmeter Teppich aufgegeben. Danach wird die Probe 30 min bei 130 °C getrocknet und anschließend 24 h bei 23 °C / 50 % rel. Luftfeuchtigkeit gelagert. Die Polnoppenauszugskraft wird in Anlehnung an die ISO 4919 bei 23 °C / 50 % rel. Luftfeuchtigkeit bestimmt, indem in einer Zug-Dehnungsmaschine die Kraft/das Gewicht gemessen wird, bei der sich eine Schlaufe vom textilen Bodenbelag löst. Das Ergebnis wird in kg gemessen und angegeben. Der Test wird insgesamt fünfmal wiederholt und der Mittelwert gebildet. Der Fehler der Messung liegt bei ca. 20 %.

### Beispiele

### Beispiel 1: Herstellung einer erfindungsgemäßen Polymerdispersion - 4 Gew. % Ethylen

Dieses Beispiel beschreibt die Herstellung einer Dispersion mit 4 Gew.-% an Ethylen, bezogen auf die Menge an Hauptmonomer (= Ethylen + Vinylacetat).

In einer Druckapparatur mit Ankerrührer (150 UpM), Mantelheizung und Dosierpumpen und einem Volumen von 26,3 I wurde eine wäßrige Lösung, bestehend aus folgenden Bestandteilen vorgelegt:
- 9495 g: E-Wasser (entionisiertes Wasser)
- 534 g: Celvol^{®} 523 Lösung (15 %ig in E-Wasser, Polyvinylalkohol von Celanese)
- 32 g: Natriumacetat (wasserfrei)
- 213 g: Natriumethensulfonat (30 %ig)
- 533 g: Emulsogen^{®} EPN 287 (70 %ig in E-Wasser, nichtionischer Emulgator auf Basis eines Ethoxylats von Clariant)
- 416 g: Texapon^{®} K 12/15 (15 %ig in E-Wasser, Natriumdodecylsulfat von Cognis)
- 5,0 g: Natriumdisulfit
- 0,03 g: Mohrsches Salz

Der Polyvinylalkohol wurde zuvor je in einer 15 %igen Lösung bei 90 °C 2 Stunden lang gelöst. Die Apparatur wurde von Luftsauerstoff befreit. 5 % der Vinylacetatmenge (Gesamtmenge: 12269 g) wurde in den Reaktor dosiert. Das Ethylenventil wurde geöffnet und 6,8 % Ethylen (Gesamtmenge 314 g) aufgedrückt bei ca. 10 bar. Gleichzeitig wurde die Temperatur auf 65 °C erhöht. Bei 55 °C wurde der Initiator 1 (28 g Natriumperoxodisulfat in 223 g E-Wasser) schnell hinzudosiert. Wenn die 65 °C erreicht waren, wurde der Rest Vinylacetat in 210 Minuten hinzudosiert und das Ethylenventil so lange geöffnet, bis die gesamte Menge Ethylen im Reaktor ist. Der Druck bleibt bei max. ca. 15 bar. Nach 180 Minuten der Vinylacetatdosierung wurde eine Initiatorlösung 2 (13 g Natriumperoxodisulfat in 223 g E-Wasser) hinzudosiert.

Nach Ende der Vinylacetatdosierung wurde der Ansatz innerhalb 50 Minuten auf 85 °C aufgeheizt und 1 Stunde bei dieser Temperatur gehalten. Anschließend wurde der Ansatz abgekühlt. Anschließend wurde noch eine Redoxbehandlung (t-Butylhydroperoxid / Brüggolit FF6) und/oder eine physikalische Behandlung zur Reduzierung der Restmonomeren durchgeführt.

### Charakteristische Daten der Beispieldispersion 1

| | |
|---|---|
| Trockensubstanz: | 53,5 % |
| pH (Elektrodenmessung): | 4,7 |
| Viskosität nach Brookfield (23 °C, Spindel 3, 20 rpm): | 2200 mPas |
| Restmonomergehalt: | < 0,1 % |
| Glasübergangstemperatur des Polymerisats (10 K/min): | 27 °C |
| Teilchengrößenverteilung (LAS): | d_{w} = 218 nm |
| | d_{w}/dₙ = 1,39 |

### Beispiel 2: Herstellung einer erfindungsgemäßen Polymerdispersion - 2,5 Gew. % Ethylen

Es wurde analog Beispiel 1 gearbeitet mit der Änderung, dass nur 2,5 Gew.-% Ethylen bzgl. Hauptmonomer (= Ethylen + Vinylacetat) verwendet wurden. Der Anteil an Vinylacetat wurde entsprechend erhöht.

### Charakteristische Daten der Beispieldispersion 2

| | |
|---|---|
| Trockensubstanz: | 53,2 % |
| pH (Elektrodenmessung): | 4,6 |
| Viskosität nach Brookfield (23 °C, Spindel 3, 20 rpm): | 1700 mPas |
| Restmonomergehalt: | < 0,1 % |
| Glasübergangstemperatur des Polymerisats (10 K/min): | 30 °C |
| Teilchengrößenverteilung (LAS): | d_{w} = 186 nm |
| | d_{w}/dₙ = 1,35 |

### Beispiel 3: Herstellung einer erfindungsgemäßen Polymerdispersion - 2,5 Gew. % Ethylen, ohne Schutzkolloid

Es wurde analog Beispiel 1 gearbeitet mit der Änderung, dass nur 2,5 Gew.-% Ethylen bzgl. Hauptmonomer (= Ethylen + Vinylacetat) verwendet wurde und dass kein Polyvinylalkohol verwendet wurde. Der Anteil an Vinylacetat wurde entsprechend erhöht.

### Charakteristische Daten der Beispieldispersion 3

| | |
|---|---|
| Trockensubstanz: | 54,0 % |
| pH (Elektrodenmessung): | 4,6 |
| Viskosität nach Brookfield (23 °C, Spindel 3, 20 rpm): | 1400 mPas |
| Restmonomergehalt: | < 0,1 % |
| Glasübergangstemperatur des Polymerisats (10 K/min): | 28 °C |
| Teilchengrößenverteilung (LAS): | d_{w} = 166 nm |
| | d_{w}/dₙ = 1,25 |

### Beispiel 4 (erfindungsgemäß)

In einer Druckapparatur wie in Beispiel 1 wurde folgende Dispersion hergestellt. Dabei wurde ein Verfahren mit kurzer Polymerisationszeit eingesetzt.

### Vorlage

- 9661 g: E-Wasser (entionisiertes Wasser)
- 543 g: Celvol^{®} 504 (15 %ig in E-Wasser, Polyvinylalkohol der Celanese)
- 543 g: Emulsogen^{®} EPN 287 (70 %ig in E-Wasser, nichtionischer Emulgator auf Basis eines Ethoxylats von Clariant)
- 423 g: Texapon K12/15^{®} (15 %ig in E-Wasser, ionischer sulfathaltiger Emulgator von Cognis)
- 217 g: Natriumethensulfonat (30 %ig in E-Wasser)
- 32,5 g: Natriumacetat
- 5,1 g: Natriumdisulfit
- 0,03 g: Mohr'sches Salz

### Monomer

12292 g Vinylacetat

### Ethylenmenge

512 g Ethylen

Der Polyvinylalkohol wurde zuvor in einer 15 %igen Lösung bei 90 °C 2 Stunden lang gelöst.

Die Apparatur wurde von Luftsauerstoff befreit. 20 % der Monomermischung (Gesamtmenge: 12292 g) wurde in den Reaktor innerhalb 10 min. dosiert. Das Ethylenventil wurde bei Raumtemperatur geöffnet und Ethylen bis zu einem Druck von ca. 10 bar aufgedrückt. Der Reaktor wurde auf eine Innentemperatur von 65 °C aufgeheizt. Beim Erreichen von 35 °C wurde der Initiator 1 (28,6 g Natriumperoxodisulfat in 227 g E-Wasser) innerhalb von ca. 8 min. hinzugegeben. Nach dem Erreichen von 65 °C wurde das Ethylenventil geöffnet (max. 15 bar) und es wurden die restlichen 80 % der Monomermischung, innerhalb ca. 45 min. dosiert, daß eine Innentemperatur von ca. 110 °C gehalten werden konnte. Entsprechend mußte die Kühlung eingestellt werden (in diesem Fall bei 95 °C). Sobald die Innentemperatur abzusinken begann, wurde mit der Dosierung von Initiator 2 (16,1 g Natriumperoxodisulfat in 227 g E-Wasser) begonnen (etwa 7 min nach Beginn der Monomerdosierung). Nachdem die Monomerdosierung zu Ende war, lief die Dosierung von Initiator 2 noch etwa 30 min nach. Danach wurde noch eine Stunde bei 85 °C nachgeheizt, um den Restmonomergehalt zu senken.

### Charakteristische Daten der Beispieldispersion 4

| | |
|---|---|
| Trockensubstanz: | 54,1 % |
| pH (Elektrodenmessung): | 4,3 |
| Viskosität nach Brookfield (23°C, Spindel 4, 20 rpm): | 1920 mPas |
| Restmonomergehalt: | <0,1 % |
| Glasübergangstemperatur des Polymerisats (10 K/min): | 28 °C |
| Teilchengrößenverteilung (LAS): | d_{w} = 180 nm |
| | d_{w}/dₙ = 1,19 |

### Beispiel 5: Vergleichbeispiel: VAE Dispersion mit einer größeren Menge Ethylen (nicht erfindungsgemäß)

Es wurde analog Beispiel 1 gearbeitet mit der Änderung, dass 12 Gew.-% Ethylen bzgl. Hauptmonomer (= Ethylen + Vinylacetat) verwendet wurde. Die Menge an Vinylacetat wurde entsprechend erniedrigt.

### Charakteristische Daten der Beispieldispersion 5

| | |
|---|---|
| Trockensubstanz: | 54,5 % |
| pH (Elektrodenmessung): | 4,6 |
| Viskosität nach Brookfield (23 °C, Spindel 3, 20 rpm): | 3000 mPas |
| Restmonomergehalt: | < 0,1 % |
| Glasübergangstemperatur des Polymerisats (10 K/min): | 14 °C |
| Teilchengrößenverteilung (LAS): | d_{w} = 215 nm |
| | d_{w}/dₙ = 1,5 |

### Beispiel 6 (Vergleich, SBR Latex Litex T 6820 von Polymer Latex)

Litex® T 6820 ist ein kommerzielles Produkt der Firma Polymer Latex

### Beispiel 7 (Vergleich, Vinylacetat-Homopolymer, ohne Weichmacher, Mowilith DC)

Mowilith^{®} DC ist ein kommerzielles Produkt der Firma Celanese Emulsions GmbH.

### Beispiel 8 (Vergleich, mittelharter SBR-Latex mit 59% Styrol)

Der Vergleichslatex ist ein typischer SBR-Latex für Teppich-Rückenbeschichtungen mit 59 Gew.-% Styrol-Monomereinheiten. Der Latex wurde durch Emulsionspolymerisation hergestellt, ist anionsch stabilisiert und weist einen Feststoffgehalt von 50 Gew.-% sowie eine Teilchengröße zwischen 150 and 300 nm auf.

### Anwendungstechnische Prüfungen

Die Ergebnisse der anwendungstechnischen Prüfungen von verschiedenen Dispersionenen auf verschiedenen Substraten sind in Tabelle 1 dargestellt.

**Tabelle 1: Anwendungstechnische Prüfungen**

| | Zugfestigkeit trocken (N/5cm) | Zugfestigkeit, nass (N/5cm) | Wassertropfentest (min) | Vergilbung DIN 6167 | Vergilbung DIN 6167 | Steifheit | Bruchverhalten bei 180° | Polnoppenauszugskraft (kg) |
|---|---|---|---|---|---|---|---|---|
| Substrat | Whatman Papier | Whatman Papier | Whatman Papier | Whatman Papier | Whatman Papier | Webteppich (Kunstfaser) | WebTeppich (Kunstfaser) | WebTeppich (Naturfaser) |
| Dispersion | | | | 1 min; 180 °C | 1 min; 200 °C | | | |
| Beispiel 1 (erfindungsgemäß) | 260 | 20 | 2 | 4,5 | 7,5 | 4 | Nein | |
| Beispiel 2 (erfindungsgemäß) | 300 | 26 | 2 | 4,4 | 7,6 | 5 | Nein | 4,5 |
| Beispiel 3 (erfindungsgemäß) | 280 | 24 | 1:30 | 4,4 | 7,5 | 5 | Nein | |
| Beispiel 4 (erfindungsgemäß) | 280 | 22 | 2 | 4,5 | 7,4 | 4 | Nein | |
| Beispiel 5 (Vergleich) | 220 | 15 | 2 | 4,5 | 7,3 | 1 | Nein | |
| Beispiel 6 (Vergleich) | 310 | 30 | 2,5 | 5,4 | 7,2 | 5 | Nein | |
| Beispiel 7 (Vergleich) | 340 | 30 | 20 | 4,9 | 7,3 | 6 | Ja | |
| Beispiel 8 (Vergleich) | | | | | | | | 2,5 |

Die in Tabelle 1 dargestellten Ergebnisse der Zugfestigkeiten, des Wassertropfentests und der Vergilbungstests belegen, dass die erfindungsgemäß eingesetzten Bindemittel den textilen Flächengebilden ähnliche Eigenschaften verleihen wie herkömmliche für Teppich-Rückenbeschichtungen eingesetzte steife SBR-Latices. Die Ergebnisse zeigen darüber hinaus, dass die Haptik der erfindungsgemäß beschichteten Teppiche vergleichbar ist mit den Standardprodukten. Darüber hinaus stellt die sogenannte Polnoppenauszugskraft bei textilen Fußbodenbelägen ein Maß für die Bindefestigkeitsfähigkeit einer Dispersion dar. Das erfindungsgemäße Beispiel (Nr. 2, Tabelle 1) zeigt eine deutlich höhere und damit verbesserte Polnoppenauszugskraft als das Vergleichsbeispiel (Nr. 8, Tabelle 1).

Der Ethylengehalt der in den erfindungsgemäßen Dispersionen eingesetzten VAE-Copolymeren bewirkt einen inneren Weichmachereffekt. Dieses entspricht in etwa dem Verhalten eines SBR-Latex. Im Vergleich zu SBR-Latex weist die erfindungsgemäß eingesetzte VAE-Copolymerdispersion eine Reihe von Vorteilen auf. Dabei handelt es sich um eine verbesserte Flammbeständigkeit; somit lassen sich Formulierungen mit weniger Gehalt an Flammschutzmitteln einsetzen. Auch entsteht bei der Verbrennung eines erfindungsgemäß rückenbeschichteten Textilprodukts weniger Rauch. Darüber hinaus ist die VAE-Copolymerdispersion geruchsneutral, kann mit einem geringen Gehalt an flüchtigen organischen Bestandteilen ("VOC") oder sogar ohne VOC formuliert werden, verleiht dem rückenbeschichteten Textilprodukt eine außerordentlich gute Alterungsbeständigkeit.

Vinylacetat-Homopolymerdispersionen benötigen in der Regel externe Weichmacher. Diese können während des Gebrauchs migrieren. Die erfindungsgemäßen Texilprodukte kommen ohne Weichmacher aus.

Ein weiterer Vorteil verglichen mit weicheren VAE-Copolymerdispersionen mit Glasübergangstemperaturen unter 15 °C oder mit VA-Homopolymerdispersionen ist in der Kombination von erhöhter Steifheit mit verbesserten Bruchverhalten sowie in einer guten Dimensionsstabilität zu sehen.

Als weiterer Vorteil ist die einfache Emulsionsrezeptur zu sehen; die Dispersion kann durch Verfahren mit kurzen Verfahrensdauern hergestellt werden (z.B. Verfahrensdauern von 3 bis 5 Stunden, gerechnet von Reaktorleerstand zu Reaktorleerstand).

## Patentansprüche

1. Vinylacetat-Ethylen-Copolymerdispersion, die sich von 60 bis 99 Gew.-% Vinylacetat, 1 bis 4 Gew. % Ethylen ableitet, wobei das Copolymere eine Glasübergangstemperatur von +15 bis +32 °C aufweist, einen mittleren Teilchendurchmesser d_{w} von 50 bis 500 nm besitzt und mit mindestens 1 Gew. % an Emulgatoren und 0-2 Gew. % an Schutzkolloiden stabilisiert ist, wobei im Falle von Stabilisatorsystemen aus Emulgatoren und Schutzkolloiden die Menge an Emulgator mindestens doppelt so groß ist, wie die Menge an Schutzkolloid.

2. Vinylacetat-Ethylen-Copolymerdispersion nach Anspruch 1, **dadurch gekennzeichnet, dass** das Vinylester-Ethylen-Copolymer sich von bis zu 30 Gew. % weiteren mit Vinylacetat und Ethylen copolymerisierbaren Monomeren ableitet, wobei vorzugsweise die weiteren mit Vinylacetat und Ethylen copolymerisierbaren Monomeren ausgewählt werden aus der Gruppe der ethylenisch ungesättigten Säuren, oder deren Salzen, der ethylenisch ungesättigten Monomere, die wenigstens eine Amid-, Epoxy-, Hydroxy-, N-Methylol-, Trialkoxysilan- oder Carbonylgruppe aufweisen, oder von Kombinationen von zwei oder mehreren Monomeren aus dieser Gruppe, oder
wobei die weiteren mit Vinylacetat und Ethylen copolymerisierbaren Monomeren ausgewählt werden aus der Gruppe der Vinylester, die nicht Vinylacetat sind, der alpha-Olefine, die nicht Ethylen sind, der Vinylaromaten, der Ester von ethylenisch ungesättigten Monocarbonsäuren oder der Diester von ethylenisch ungesättigten Dicarbonsäuren.

3. Vinylacetat-Ethylen-Copolymerdispersion nach einem der Ansprüche 1 bis 2, **dadurch gekennzeichnet, dass** deren Viskosität 400 bis 4.000 mPas, gemessen bei 25 °C mit dem Brookfield-Viskosimeter.

4. Vinylacetat-Ethylen-Copolymerdispersion nach einem der Ansprüche 1 bis 3, **dadurch gekennzeichnet, dass** das Vinylacetat-Ethylen-Copolymere einen Ethylengehalt von 1 bis 3 Gew. % aufweist.

5. Vinylacetat-Ethylen-Copolymerdispersion nach einem der Ansprüche 1 bis 4, **dadurch gekennzeichnet, dass** die Glasübergangstemperatur des Vinylacetat-Ethylen-Copolymeren zwischen +20 und +30°C liegt.

6. Vinylacetat-Ethylen-Copolymerdispersion nach einem der Ansprüche 1 bis 5, **dadurch gekennzeichnet, dass** diese als weiteres durch Polymerisation in Abwesenheit eines Schutzkolloids erhalten wurde.

7. Vinylacetat-Ethylen-Copolymerdispersion nach einem der Ansprüche 1 bis 6, **dadurch gekennzeichnet, dass** die Emulgatoren keine Alkylphenylethoxylate enthalten.

8. Textiles Flächengebilde behandelt mit einer Vinylacetat-Ethylen-Copolymerdispersion nach einem der Ansprüche 1 bis 7.

9. Textiles Flächengebilde nach Anspruch 8, **dadurch gekennzeichnet,**
**dass** dieses in Form eines in Form eines Webteppichs oder eines getufteten Teppichs vorliegt, das auf der von der Trittseite abgewandten Seite mit der Vinylester-Ethylen-Copolymerdispersion beschichtet und teilimprägniert ist und wobei das textile Flächengebilde ein Flächengewicht von vorzugsweise 1000 bis 3000 g/m² aufweist; oder
**dass** dieses in Form eines Teppichs vorliegt, welches auf der von der Trittseite abgewandten Seite mit einer sekundären Rückenbeschichtung verklebt ist, wobei die Verklebung zwischen beiden Schichten durch die Vinylester-Ethylen-Copolymerisatdispersion erfolgt ist; oder
**dass** dieses in Form eines in Form eines Teppichs vorliegt, bei dem eine textile Fläche auf der Basis eines schweren Nonwovens mit der Vinylester-Ethylen-Copolymerisatdispersion imprägniert ist, wobei vorzugsweise das Nonwoven ein Flächengewicht von 200 bis 600 g/m² aufweist; oder
**dass** dieses in Form eines in Form eines Gurtes vorliegt, bei dem eine textile Fläche mit der Vinylacetat-Ethylen-Copolymerdispersion imprägniert ist, wobei das textile Flächengebilde vorzugsweise ein Flächengewicht von 500 bis 3000 g/m² aufweist.

10. Textiles Flächengebilde nach einem der Ansprüche 8 bis 9, **dadurch gekennzeichnet, dass** dieses mindestens eine textile Fläche aufweist, die ausgewählt wird aus der Gruppe Vliesstoff, Gewebe, Gelege, Gewirke und Florstoffe.

11. Textiles Flächengebilde nach Anspruch 10, **dadurch gekennzeichnet, dass** der Florstoff auf der dem Flor abgewandten Seite mit der Vinylacetat-Ethylen-Copolymerdispersion beschichtet und teilimprägniert ist.

12. Verwendung einer Vinylacetat-Ethylen-Copolymerdispersion nach einem der Ansprüche 1 bis 7 zur Imprägnierung und/oder Beschichtung von textilen Flächengebilden.

13. Verwendung nach Anspruch 12, **dadurch gekennzeichnet, dass** die textilen Flächengebilde bei der Herstellung von Fußbodenbelägen oder von Gurten eingesetzt werden.

## Claims

1. A vinyl acetate-ethylene-copolymer dispersion derived from 60 to 99% by weight of vinyl acetate, 1 to 4% by weight of ethylene, wherein said copolymer has a glass transition temperature of +15 to +32 °C, an average particle diameter d_{w} of from 50 to 500 nm and is stabilized with at least 1% by weight of emulsifiers, and 0-2% by weight of protective colloids, wherein when stabilizing systems of emulsifiers and protective colloids are used, the amount of emulsifier is at least double the amount of protective colloid.

2. The vinyl acetate-ethylene-copolymer dispersion according to claim 1, **characterized in that** the vinyl ester-ethylene copolymer is derived from up to 30% by weight of other monomers copolymerizable with vinyl acetate and ethylene,
wherein preferably said other monomers copolymerizable with vinyl acetate and ethylene are selected from the group of ethylenically unsaturated acids or salts thereof, ethylenically unsaturated monomers having at least one amide, epoxy, hydroxy, N-methylol, trialkoxysilane or carbonyl group, or from combinations of any two or more monomers from this group, or
wherein said other monomers copolymerizable with vinyl acetate and ethylene are selected from the group of vinyl esters other than vinyl acetate, alpha-olefins other than ethylene, vinyl aromatics, esters of ethylenically unsaturated monocarboxylic acids or diesters of ethylenically unsaturated dicarboxylic acids.

3. The vinyl acetate-ethylene-copolymer dispersion according to either of claims 1 to 2, **characterized in that** its viscosity is from 400 to 4000 mPa·s, as measured at 25 °C with a Brookfield viscometer.

4. The vinyl acetate-ethylene-copolymer dispersion according to any of claims 1 to 3, **characterized in that** said vinyl acetate-ethylene copolymer has an ethylene content of from 1 to 3% by weight.

5. The vinyl acetate-ethylene-copolymer dispersion according to any of claims 1 to 4, **characterized in that** the glass transition temperatures of said vinyl acetate-ethylene copolymer is from +20 to +30 °C.

6. The vinyl acetate-ethylene-copolymer dispersion according to any of claims 1 to 5, **characterized in that** it further has been obtained by polymerization in the absence of a protective colloid.

7. The vinyl acetate-ethylene-copolymer dispersion according to any of claims 1 to 6, **characterized in that** said emulsifiers do not contain any alkylphenyl ethoxylates.

8. A textile web treated with a vinyl acetate-ethylene-copolymer dispersion according to any of claims 1 to 7.

9. The textile web according to claim 8, **characterized in that** it is in the form of a woven carpet of tufted carpet that is coated and partially impregnated with said vinyl ester-ethylene copolymer dispersion on the side facing away from the step side, and wherein said textile web has a mass per unit area of preferably from 1000 to 3000 g/m²; or
that it is in the form of a carpet that is adhesively bonded with a secondary backing on the side facing away from the step side, wherein the bonding between the two layers was made by said vinyl ester-ethylene copolymer dispersion; or
that it is in the form of a carpet in which a textile web based on a heavy non-woven is impregnated with said vinyl ester-ethylene copolymer dispersion, wherein preferably said non-woven has a mass per unit area of from 200 to 600 g/m²; or
that it is in the form of a belt in which a textile web is impregnated with said vinyl acetate-ethylene copolymer dispersion, wherein said textile web preferably has a mass per unit area of from 500 to 3000 g/m².

10. The textile web according to any of claims 8 to 9, **characterized in that** it has at least one textile web selected from the group of non-wovens, woven fabrics, laid scrims, knitwear and pile fabrics.

11. The textile web according to claim 10, **characterized in that** said pile fabric is coated and partially impregnated with said vinyl acetate-ethylene copolymer dispersion on the side facing away from the pile.

12. Use of a vinyl acetate-ethylene copolymer dispersion according to any of claims 1 to 7 for impregnating and/or coating textile webs.

13. The use according to claim 12, **characterized in that** said textile webs are employed in the production of floor coverings or belts.

## Revendications

1. Dispersion de copolymère acétate de vinyle/éthylène dérivée de 60 à 99 % en poids d'acétate de vinyle et de 1 à 4 % en poids d'éthylène, dans laquelle ledit copolymère présente une température de transition vitreuse de +15 à +32 °C, un diamètre moyen des particules d_{w} de 50 à 500 nm, et est stabilisé avec au moins 1 % en poids d'émulsifiants et de 0 à 2 % en poids de colloïdes protecteurs, dans laquelle, en case de systèmes de stabilisateurs constitués d'émulsifiants et de colloïdes protecteurs, la quantité d'émulsifiant est au moins le double de la quantité de colloïde protecteur.

2. Dispersion de copolymère acétate de vinyle/éthylène selon la revendication 1, **caractérisée en ce que** le copolymère ester vinylique/éthylène est dérivé de jusqu'à 30 % en poids d'autres monomères copolymérisables avec l'acétate de vinyle et l'éthylène,
dans laquelle de préférence lesdits autres monomères copolymérisables avec l'acétate de vinyle et l'éthylène sont choisis dans le groupe des acides éthyléniquement insaturés ou des sels de ceux-ci, des monomères éthyléniquement insaturés présentant au moins un groupe d'amide, d'époxy, de hydroxy, de N-méthylol, de trialkoxysilane ou de carbonyle, ou parmi des combinaisons de deux ou plusieurs monomères provenant de ce groupe, ou
dans laquelle lesdits autres monomères copolymérisables avec l'acétate de vinyle et l'éthylène sont choisis dans le groupe des esters vinyliques autres que l'acétate de vinyle, les alpha-oléfines autres que l'éthylène, les composés vinyliques aromatiques, les esters d'acides monocarboxyliques éthyléniquement insaturés, ou les diesters d'acides dicarboxyliques éthyléniquement insaturés.

3. Dispersion de copolymère acétate de vinyle/éthylène selon l'une des revendications 1 à 2, **caractérisée en ce que** son viscosité est de 400 à 4000 mPa·s, mesurée à 25 °C avec un viscosimètre Brookfield.

4. Dispersion de copolymère acétate de vinyle/éthylène selon l'une quelconque des revendications 1 à 3, **caractérisée en ce que** ledit copolymère acétate de vinyle/éthylène présente une teneur en éthylène de 1 à 3 % en poids.

5. Dispersion de copolymère acétate de vinyle/éthylène selon l'une quelconque des revendications 1 à 4, **caractérisée en ce que** la température de transition vitreuse du copolymère acétate de vinyle/éthylène est comprise entre +20 et +30 °C.

6. Dispersion de copolymère acétate de vinyle/éthylène selon l'une quelconque des revendications 1 à 5, **caractérisée en ce que** ladite dispersion a été obtenue en outre par une polymérisation en l'absence d'un colloïde protecteur.

7. Dispersion de copolymère acétate de vinyle/éthylène selon l'une quelconque des revendications 1 à 6, **caractérisée en ce que** lesdits émulsifiants ne contiennent pas d'éthoxylates d'alkylphényle.

8. Textile traité avec une dispersion de copolymère acétate de vinyle/éthylène selon l'une quelconque des revendications 1 à 7.

9. Textile selon la revendication 8, **caractérisé en ce que** ledit textile se présente sous la forme de tapis tissé ou de tapis touffeté enduit et partiellement imprégné avec ladite dispersion de copolymère acétate de vinyle/éthylène sur le côté opposé au côté de marche, et dans lequel ledit textile présente un poids par unité de surface compris de préférence entre 1000 et 3000 g/m² ; ou
qu'il se présente sous la forme de tapis collé sur une couche d'envers secondaire sur le côté opposé au côté de marche, le collage entre les deux couches étant effectué par ladite dispersion de copolymère acétate de vinyle/éthylène ; ou
qu'il se présente sous la forme de tapis dans lequel une surface textile basée sur un non-tissé épais est imprégnée avec ladite dispersion de copolymère acétate de vinyle/éthylène, ledit non-tissé ayant de préférence un poids par unité de surface compris entre 200 et 600 g/m² ; ou
qu'il se présente sous la forme de ceinture dans laquelle une surface textile est imprégnée avec ladite dispersion de copolymère acétate de vinyle/éthylène, ledit textile ayant de préférence un poids par unité de surface compris entre 500 et 3000 g/m².

10. Textile selon l'une quelconque des revendications 8 à 9, **caractérisé en ce que** ledit textile possède au moins une surface textile choisie dans le groupe des non-tissés consolidés, des tissus, des nattes, des tissus de mailles et des tissus à couche de poils.

11. Textile selon la revendication 10, **caractérisé en ce que** ledit tissu à couche de poils est enduit et partiellement imprégné avec ladite dispersion de copolymère acétate de vinyle/éthylène sur le côté opposé au côté de la couche de poils.

12. Utilisation d'une dispersion de copolymère acétate de vinyle/éthylène selon l'une quelconque des revendications 1 à 7 pour imprégner et/ou enduire des textiles.

13. Utilisation selon la revendication 12, **caractérisée en ce que** lesdits textiles sont utilisés pour la production de revêtements de sol ou de ceintures.
